(19) Europäisches Patentamt
European Patent Office
Office européen des brevets

(11) EP 2 690 954 B1

(12) **EUROPEAN PATENT SPECIFICATION**

(45) Date of publication and mention of the grant of the patent:
**22.08.2018 Bulletin 2018/34**

(21) Application number: **12763344.4**

(22) Date of filing: **28.03.2012**

(51) Int Cl.:
***A01G 7/06*** *(2006.01)* ***A01N 25/00*** *(2006.01)*
***A01P 21/00*** *(2006.01)* ***A01N 37/38*** *(2006.01)*

(86) International application number:
**PCT/JP2012/059121**

(87) International publication number:
**WO 2012/133907 (04.10.2012 Gazette 2012/40)**

(54) **METHOD FOR PROMOTING PLANT GROWTH**

VERFAHREN ZUR FÖRDERUNG EINES PFLANZENWACHSTUMS

PROCÉDÉ DESTINÉ À FAVORISER LA CROISSANCE D’UNE PLANTE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **30.03.2011 JP 2011074570**

(43) Date of publication of application:
**05.02.2014 Bulletin 2014/06**

(73) Proprietor: **Sumitomo Chemical Company, Limited**
**Tokyo 104-8260 (JP)**

(72) Inventors:
- **MATSUSHIMA, Yutaka**
  **Takarazuka-shi,**
  **Hyogo 665-8555 (JP)**
- **TAMAKI, Hiroaki**
  **Takarazuka-shi,**
  **Hyogo 665-8555 (JP)**

(74) Representative: **Vossius & Partner**
**Patentanwälte Rechtsanwälte mbB**
**Siebertstrasse 3**
**81675 München (DE)**

(56) References cited:
**EP-A1- 0 754 672**
**WO-A1-95/27693**
**WO-A1-96/07633**
**WO-A1-2008/059053**
**WO-A1-2010/032873**
**WO-A2-2010/061940**
**WO-A2-2010/061943**
**JP-A- 2010 095 524**
**JP-A- 2010 126 440**
**JP-A- 2010 126 444**

- **GROSSMANN KLAUS ET AL: "Regulation of phytohormone levels, leaf senescence and transpiration by the strobilurin kresoxim-methyl in wheat (Triticum aestivum)", JOURNAL OF PLANT PHYSIOLOGY, URBAN UND FISCHER VERLAG, DE, vol. 154, no. 5-6, 1 May 1999 (1999-05-01) , pages 805-808, XP009088579, ISSN: 0176-1617**

Remarks:
The file contains technical information submitted after the application was filed and not included in this specification

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

### Technical Field

The present invention relates to a method for promoting the growth of plants.

### Background Art

Some chemical substances are known to show a promoting effect on the growth of plants, when the plants are treated with such a substance (See, for example, Applied Microbial Biotechnology, vol.58, pp.23-29 (2002)). Benzoxyphenylacetic acid derivatives and other strobilurin compounds, such as kresoxim-methyl are known to show a promoting effect on the growth of plants (see, for example WO2008/059053 A1 or K. Grossmann et al. in J. Plant Physiol. 1999, 154, 805-808).

The present claimed compounds are known, for example from WO2010/061940, for controlling plant diseases.

### Disclosure of Invention

An object of the present invention is to provide an excellent method for promoting the growth of plants, among others.

The present invention is based on the finding that treatment of a plant with a particular compound leads to promotion of the growth of the plant.

More specifically, the present invention provides:

[1] A method for promoting the growth of a plant, comprising treating the plant with an effective amount of a compound represented by the following formula (1) (hereinafter may be referred to as "the present compound"):

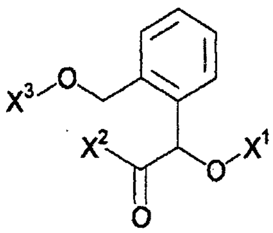

(1)

wherein $X^1$ represents a methyl group, difluoromethyl group or ethyl group; $X^2$ represents a methoxy group or methylamino group; and $X^3$ represents a phenyl group, 2-methylphenyl group or 2,5-dimethylphenyl group;
[2] The method according to [1], wherein the plant has been or is to be exposed to an abiotic stress;
[3] The method according to [1] or [2], wherein the present compound is a compound selected from the following compound group A:
<Compound group A>

(1) N-methyl-2-[2-(2,5-dimethylphenoxy)methyl]phenyl-2-methoxyacetamide, and
(2) N-methyl-2-[2-(2,5-dimethylphenoxy)methyl]phenyl-(2R)-2-methoxyacetamide;

[4] The method according to any one of [1] to [3], wherein the treatment of the plant is spraying treatment, soil treatment, seed treatment or hydroponic treatment;
[5] The method according to any one of [1] to [3], wherein the treatment of the plant is seed treatment;
[6] The method according to [5], wherein the seed treatment is to treat seeds with 10 g or more and 50 g or less of the present compound per 100 kg of seeds;
[7] The method according to any one of [1] to [6], wherein the plant is rice, corn, oilseed rape, wheat, basil, soybean, sorghum or common bean;
[8] The method according to any one of [1] to [7], wherein the plant is a transgenic plant;
[9] The method according to any one of [2] to [8], wherein the abiotic stress is high-temperature stress;
[10] The method according to any one of [2] to [8], wherein the abiotic stress is low-temperature stress;
(Hereinafter, the methods described in [1] to [10] may be collectively referred to as "the method of the present invention".) and
[11] Use of the present compound for promoting the growth of a plant.

The method of the present invention allows for provision of an excellent method for promoting plant growth.

Mode for Carrying Out the Invention

In the present invention, "growth promotion of a plant" (hereinafter may be referred to as "growth promotion") refers to an increase in the seedling establishment rate, number of healthy leaves, plant length, plant body weight, leaf area, number or weight of seeds or fruits, or number of set flowers or fruits.
Growth promotion may be quantified using the following parameters:

(1) Seedling establishment rate

Seeds of plants are sown, for example, in the soil, on a filter paper, on an agar culture medium or on sand, and then allowed to undergo cultivation for a given period of time. During the entire or partial cultivation period, temperature stress is applied, and the percentage of surviving seedlings is examined.

(2) Number (or ratio) of healthy leaves

With respect to each of plants, the number of healthy leaves is counted and the total number of healthy leaves is examined. Alternatively, the ratio of the number of healthy leaves to the number of all leaves of plants is examined.

(3) Plant length

With respect to each of plants, the length from the base of the stem of the above-ground part to the branches and leaves at the tip is measured.

(4) Plant body weight

The above-ground part of each of plants is cut and the weight is measured to determine a fresh weight of plants. Alternatively, the cut sample is dried and the weight is measured to determine a dry weight of plants.

(5) Leaf area

A photograph of plants is taken by a digital camera and the area of a green portion in the photograph is determined by image analysis software, for example, Win ROOF (manufactured by MITANI CORPORATION) to obtain a leaf area of plants.

(6) Leaf color

After sampling leaves of plants, the chlorophyll content is measured using a chlorophyll gauge (for example, SPAD-502, manufactured by Konica Minolta Holdings, Inc.) to determine the leaf color. The plants are photographed with a digital camera and the green area in the photograph is measured by extracting color for quantification and using image analysis software, such as Win ROOF (manufactured by MITANI CORPORATION).

(7) Number or weight of seeds or fruits

Plants are grown until they reach fructification or ripening of seeds or fruits, and then the number of fruits per plant is counted or the total weight of fruits per plant is measured. After cultivating plants until seeds undergo ripening, elements constituting the yield, such as the number of ears, ripening rate and thousand kernel weight are examined.

(8) Flower setting rate, fruit setting rate, seed setting rate and seed filling rate

After cultivating plants until they bear fruits, the number of flower setting and the number of fruit setting are counted to calculate the fruit setting rate % (100 × number of fruit setting/number of flower setting). After seeds are ripe, the numbers of set seeds and filled seeds are counted to calculate the seed setting rate (%) ((Number of set seeds/Number of set flowers) × 100)and the seed filling rate (%) ((Number of filled seeds/Number of set seeds) × 100).
In the method of the present invention, when a plant is treated with the present compound, the plant may be an entire plant or part thereof (*e.g.,* stem and leaf, shoot, flower, fruit, panicle, seed, bulb, tuber and root). Also, the plant may be at any of the various stages of growth of the plant (*e.g.,* the germination period, including preseeding time,

seeding time, and the period before and after the seedling emergence after sowing; the vegetative growth period, including the nursery period, the time of seedling transplantation, the time of planting or nursing cuttings and the growth period after field planting; the reproductive growth period, including the periods before, during and after flowering, immediately before heading or the heading period; and the harvest period, including a period before the expected harvest date, a period before the expected ripening date and the time of initiation of fruit coloration). As used herein, the term bulb refers to a scaly bulb, corm, rhizome, root tuber and rhizophore. The seedlings may include cuttings and sugar cane stem cuttings.

The present compound used in the present invention is a compound represented by the following formula (1):

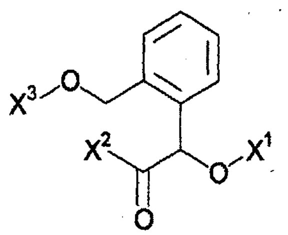

(1)

wherein $X^1$ represents a methyl group, difluoromethyl group or ethyl group; $X^2$ represents a methoxy group or methylamino group; and $X^3$ represents a phenyl group, 2-methylphenyl group or 2,5-dimethylphenyl group.

For example, embodiments of the present compounds represented by the formula (1) include the following compounds:

A compound of the formula (1), wherein $X^1$ is a methyl, difluoromethyl or ethyl group;
A compound of the formula (1), wherein $X^1$ is a methyl group;
A compound of the formula (1), wherein $X^2$ is a methoxy or methylamino group;
A compound of the formula (1), wherein $X^1$ is a methyl group and $X^2$ is a methoxy group;
A compound of the formula (1), wherein $X^1$ is a methyl group and $X^2$ is a methylamino group;
A compound of the formula (1), wherein $X^3$ is a phenyl, 2-methylphenyl or 2,5-dimethylphenyl group;
A compound of the formula (1), wherein $X^3$ is a phenyl or 2,5-dimethylphenyl group;
A compound of the formula (1), wherein $X^1$ is a methyl group, $X^2$ is a methoxy group, and $X^3$ is a 2,5-dimethylphenyl group;
A compound of the formula (1), wherein $X^1$ is a methyl group, $X^2$ is a methylamino group, and $X^3$ is a phenyl group; and
A compound of the formula (1), wherein $X^1$ is a methyl group, $X^2$ is a methylamino group, and $X^3$ is a 2,5-dimethylphenyl group.

Specific examples of the compound represented by the formula (1) are shown below.

In the compounds of the formula (1), $X^1$, $X^2$ and $X^3$ are any one of the combinations of the substituents shown in Table 1.

Table 1

| $X^1$ | $X^2$ | $X^3$ |
|---|---|---|
| $CH_3$ | $OCH_3$ | Ph |
| $CH_3$ | $OCH_3$ | 2-$CH_3$Ph |
| $CH_3$ | $OCH_3$ | 2,5-$(CH_3)_2$Ph |
| $CH_3$ | $NHCH_3$ | Ph |
| $CH_3$ | $NHCH_3$ | 2-$CH_3$Ph |
| $CH_3$ | $NHCH_3$ | 2,5-$(CH_3)_2$Ph |
| $CHF_2$ | $OCH_3$ | Ph |
| $CHF_2$ | $OCH_3$ | 2-$CH_3$Ph |
| $CHF_2$ | $OCH_3$ | 2,5-$(CH_3)_2$Ph |
| $CHF_2$ | $NHCH_3$ | Ph |
| $CHF_2$ | $NHCH_3$ | 2-$CH_3$Ph |
| $CHF_2$ | $NHCH_3$ | 2,5-$(CH_3)_2$Ph |
| $C_2H_5$ | $OCH_3$ | Ph |

(continued)

| $X^1$ | $X^2$ | $X^3$ |
|---|---|---|
| $C_2H_5$ | $OCH_3$ | 2-$CH_3$Ph |
| $C_2H_5$ | $OCH_3$ | 2,5-$(CH_3)_2$Ph |
| $C_2H_5$ | $NHCH_3$ | Ph |
| $C_2H_5$ | $NHCH_3$ | 2-$CH_3$Ph |
| $C_2H_5$ | $NHCH_3$ | 2,5-$(CH_3)_2$Ph |

The compound represented by the formula (1) may have stereoisomers such as optical isomers based on the asymmetric carbon atoms, and isomers such as tautomers. In the present invention, any isomers may be contained and used, either alone or in any isomer ratio.

The compound represented by the formula (1) may take the form of a solvate (e.g., a hydrate). In the present invention, the compound may be used in the form of a solvate.

The compound represented by the formula (1) may take the form of a crystal and/or an amorphous material. In the present invention, the compound may be used in any form.

The compounds of the formula (1) are those described in WO 95/27,693. These compounds may be synthesized using, for example, the method described in the pamphlet.

Specifically, examples of the compound represented by the formula (1) include those represented by the formulae (1a) and (1b), which are preferable in terms of effective promotion of the growth of treated plants.

The compound (1a) is N-methyl-2-[2-(2,5-dimethylphenoxy)methyl]phenyl-(2R)-2-methoxyacetamide (CAS Registry No. 394657-24-0), a compound of the formula (1) in which $X^1$ is a methyl group, $X^2$ is a methylamino group, and $X^3$ is a 2,5-dimethylphenyl group. This compound is represented by the following formula (1a):

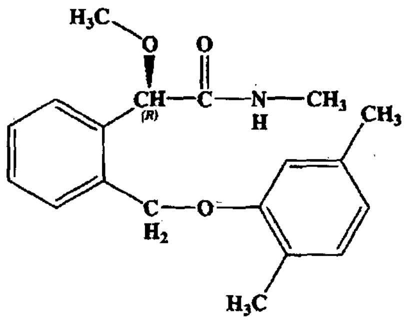

(1a)

The compound (1b) is racemic N-methyl-2-[2-(2,5-dimethylphenoxy)methyl]phenyl-2-methoxyacetamide (CAS Registry No. 173662-97-0), a compound of the formula (1) in which $X^1$ is a methyl group, $X^2$ is a methylamino group, and $X^3$ is a 2,5-dimethylphenyl group. This compound is represented by the following formula (1b):

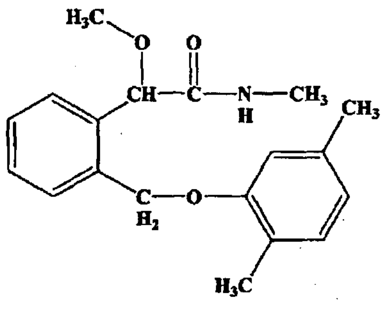

(1b)

When used in the method of the present invention, the present compound may be used alone or formulated with various inert components, as described below.

Examples of the solid carrier used in formulation include fine powders or granules such as minerals such as kaolin clay, attapulgite clay, bentonite, montmorillonite, acid white clay, pyrophyllite, talc, diatomaceous earth and calcite; natural organic materials such as corn rachis powder and walnut husk powder; synthetic organic materials such as urea; salts such as calcium carbonate and ammonium sulfate; and synthetic inorganic materials such as synthetic hydrated

silicon oxide; and as a liquid carrier, aromatic hydrocarbons such as xylene, alkylbenzene and methylnaphthalene; alcohols such as 2-propanol, ethylene glycol, propylene glycol, and ethylene glycol monoethyl ether; ketones such as acetone, cyclohexanone and isophorone; vegetable oil such as soybean oil and cotton seed oil; petroleum aliphatic hydrocarbons, esters, dimethylsulfoxide, acetonitrile and water.

Examples of the surfactant include anionic surfactants such as alkyl sulfate ester salts, alkylaryl sulfonate salts, dialkyl sulfosuccinate salts, polyoxyethylene alkylaryl ether phosphate ester salts, lignosulfonate salts and naphthalene sulfonate formaldehyde polycondensates; nonionic surfactants such as polyoxyethylene alkyl aryl ethers, polyoxyethylene alkylpolyoxypropylene block copolymers and sorbitan fatty acid esters; and cationic surfactants such as alkyltrimethylammonium salts.

Examples of the other formulation auxiliary agents include water-soluble polymers such as polyvinyl alcohol and polyvinylpyrrolidone, polysaccharides such as Arabic gum, alginic acid and the salt thereof, CMC (carboxymethylcellulose), Xanthan gum, inorganic materials such as aluminum magnesium silicate and alumina sol, preservatives, coloring agents and stabilization agents such as PAP (acid phosphate isopropyl) and BHT.

When plants are treated with the present compound in the method of the present invention, the treatment is performed by treating the plants or their cultivation areas with an effective amount of the present compound. In the treatment of plants or their cultivation areas, the present compound is applied in a single application or multiple applications.

Specifically, examples of the applications in the method of the present invention include treatment of foliage, floral organs or panicles, such as foliage spraying; treatment of soil (cultivation areas) before or after planting; treatment of seeds, such as seed sterilization, soaking or coating; treatment of seedlings; and treatment of bulbs.

Specifically, examples of the treatments of foliage, floral organs or panicles in the method of the present invention include treatment of the surface of plants, such as foliage spraying and trunk spraying. Also, examples of the treatments include spray treatment of floral organs or entire plants in the flowering stage including before, during and after flowering. For crop plants and the like, examples of the treatments include spray treatment of panicles or entire plants in the heading stage.

Examples of the soil treatment method in the method of the present invention include spraying onto the soil, soil incorporation, and perfusion of a chemical liquid into the soil (irrigation of chemical liquid, soil injection, and dripping of chemical liquid). Examples of the place to be treated include planting hole, furrow, around a planting hole, around a furrow, entire surface of cultivation lands, the parts between the soil and the plant, area between roots, area beneath the trunk, main furrow, growing soil, seedling raising box, seedling raising tray and seedbed. Examples of the treating period include before seeding, at the time of seeding, immediately after seeding, raising period, before settled planting, at the time of settled planting, and growing period after settled planting. In the soil treatment, a solid fertilizer, such as a paste fertilizer, containing the present compound may be applied to the soil. Also, the present compound may be mixed in an irrigation liquid, and, examples thereof include injecting to irrigation facilities (irrigation tube, irrigation pipe, sprinkler, etc.), mixing into the flooding liquid between furrows, mixing into a hydroponic medium and the like. Alternatively, an irrigation liquid may be mixed with the present compound in advance and, for example, used for treatment by an appropriate irrigating method including the irrigation method mentioned above and the other methods such as sprinkling and flooding.

The seed treatment in the method of the present invention refers to a process for treating seeds, bulbs and the like of plants of interest with the present compound; specific examples of the treatment include a spraying treatment by which a suspension of the present compound is atomized to be sprayed onto the surface of seeds or bulbs; a smear treatment by which the present compound in the form of a wettable powder, an emulsion, a flowable agent or the like is applied, directly or after being added with a small amount of water, onto seeds or bulbs; a soaking treatment in which seeds are soaked into a solution of the present compound for a certain period of time; a film coating treatment; and a pellet coating treatment.

Examples of the treatment of seedlings in the method of the present invention include spraying treatment of spraying to the entire seedlings a dilution having a proper concentration of active ingredients prepared by diluting the present compound with water, immersing treatment of immersing seedlings in the dilution, and coating treatment of adhering the present compound formulated into a dust formulation to the entire seedlings. Examples of the method of treating the soil before or after sowing seedlings include a method of spraying a dilution having a proper concentration of active ingredients prepared by diluting the present compound with water to seedlings or the soil around seedlings after sowing seedlings, and a method of spraying the present compound formulated into a solid formulation such as a granule to soil around seedlings after sowing seedlings.

The present compound may be mixed with a hydroponic medium in hydroponics, and may also be used as one of culture medium components in tissue culture. When the present compound is used for hydroponics, it can be dissolved or suspended in a conventionally used culture medium for hydroponics, such as ENSHI formula, at a concentration within a range from 3 ppm to 30 ppm. When the present compound is used at the time of tissue culture or cell culture, it can be dissolved or suspended in a conventionally used culture medium for plant tissue culture, such as an

MS culture medium, at a concentration within a range from 3 ppm to 30 ppm. In this case, in accordance with a usual method, saccharides as a carbon source, various phytohormones and the like can be appropriately added.

When the present compound is used for treatment of plants or growing sites of plants, the treatment amount can vary according to the kind of plants to be treated, formulation form, treating period and meteorological conditions, but is usually within a rang from 0.1 g to 1,000 g, and preferably from 100 g to 250 g, in terms of an active ingredient amount, per 10,000 $m^2$. When the present compound is incorporated into the entire soil, the treatment amount is usually within a range from 0.1 g to 1,000 g, and preferably from 100 g to 250 g, in terms of an active ingredient amount, per 10,000 $m^2$.

At this time, an emulsion, a wettable powder, a flowable agent and a microcapsule are usually used for the treatment by spraying after dilution with water. In this case, the concentration of the active ingredient is usually within a range from 0.01 ppm to 10,000 ppm, and preferably from 10 ppm to 100 ppm. A dust formulation and a granule are usually used for the treatment as they are without dilution.

In the treatment of seeds, the treating amount of the present compound is generally 5 g to 1000 g and preferably 10 g to 50 g per 100 kg of seeds. For example, the treating amount of the present compound is preferably 25 μg to 125 μg per one grain of corn.

The plants to which the method of the present invention can be applied include the following:

Crops: corn, rice, wheat, barley, rye, oat, sorghum, cotton, soybean, peanut, buckwheat, beet, oilseed rape, sunflower, sugar cane, tobacco, hop, etc.;

Vegetables: solanaceous vegetables (eggplant, tomato, potato, pepper, sweet pepper, etc.), cucurbitaceous vegetables (cucumber, pumpkin, zucchini, water melon, melon, oriental melon, etc.), cruciferous vegetables (Japanese radish, turnip, horseradish, kohlrabi, Chinese cabbage, cabbage, leaf mustard, broccoli, cauliflower, etc.), asteraceous vegetables (burdock, crown daisy, artichoke, lettuce, etc.), liliaceous vegetables (green onion, onion, garlic, asparagus, etc.), apiaceous vegetables (carrot, parsley, celery, parsnip, etc.), chenopodiaceous vegetables (spinach, chard, etc.), Labiatae vegetables (Japanese basil, mint, basil, etc.), leguminous vegetables (pea, common bean, azuki bean, broad bean, chikbean, etc.), strawberry, sweet potato, Japanese yam, taro, Amorphophallus konjac, ginger, okra, etc.;

Fruits: pomaceous fruits (apple, pear, Japanese pear, Chinese quince, quince, etc.), stone fleshy fruits (peach, plum, nectarine, Prunus mume, cherry fruit, apricot, prune, etc.), citrus fruits (Citrus unshiu, orange, lemon, rime, grapefruit, etc.), nuts (chestnuts, walnuts, hazelnuts, almond, pistachio, cashew nuts, macadamia nuts, etc.), berries (blueberry, cranberry, blackberry, raspberry, etc.), grape, persimmon, olive, Japanese plum, banana, coffee, date palm, coconuts, oil palm, etc.;

Trees other than fruit trees: tea, mulberry, flowering trees (Rhododendron indicum, camellia, hydrangea, sasanqua, skimmia, cherry, tulip tree, crape myrtle, orange osmanthus, etc.), roadside trees (ash tree, birch, dogwood, eucalyptus, ginkgo biloba, lilac, maple, oak, poplar, redbud, liquidambar, sycamore, zelkova, Japanese arborvitae, fir, hemlock fir, juniper, pine, spruce, yew, elm, chestnut, etc.), Viburnum awabuki, Podocarpus macrophyllus, cedar, cypress, croton, Japanese spindle, Japanese photinia, etc.;

Grasses: Zoysia grasses (Z. japonica, Z. pacifica, etc.), bermudagrasses (Bermuda grass, etc.), bent grasses (redtop, creeping bent, colonial bent, etc.), bluegrasses (Kentucky bluegrass, rough bluegrass), fescues (tall fescue, Chewing's fescue, creeping red fescue), ryegrasses (darnel, rye grass, etc.), orchard grass, timothy grass, etc.; and

Other plants: ornamental flowers (rose, carnation, chrysanthemum, eustoma, gypsophila, gerbera, marigold, salvia, petunia, verbena, tulip, aster, gentian, lily, pansy, cyclamen, orchid, lily of the valley, lavender, stock, ornamental cabbage, primula, poinsettia, gladiolus, cattleya, daisy, cymbidium, begonia, etc.), biofuel plants (Jatropha, safflower, camellias, switchgrass, miscanthus, reed canarygrass, giant cane, kenaf, cassava, willow, etc.), ornamental plants, etc.

Preferably, examples of the plants to which the method of the present invention can be applied include: tea, apple, pear, grape, cherry fruit, peach, nectarine, persimmon, Japanese plum, plum, soybean, lettuce, cabbage, tomato, eggplant, cucumber, water melon, common bean, pea, azuki bean, grass, oilseed rape, strawberry, almond, corn, sorghum, broad bean, Chinese cabbage, potato, peanut, rice, wheat, taro, Amorphophallus konjac, Japanese yam, Japanese radish, turnip, parsley, oriental melon, okra, ginger, lemon, orange, grapefruit, lime, blueberry, chestnut, hop, and basil. More preferably, examples of the plants include rice, corn, oilseed rape, wheat, basil, soybean, sorghum and common bean.

The "plants" described above include plants to which resistance to the following agents is conferred using a classical breeding method or a genetic engineering technique: 4-hydroxyphenylpyruvate-dioxygenase inhibitors, such as isoxaflutole; acetolactate synthetase (hereinafter referred to as ALS) inhibitors, such as imazethapyr and thifensulfuron-methyl; 5-enolpyruvylshikimate-3-phosphate synthase (hereinafter referred to as EPSPS) inhibitors such as glyphosate; glutamine synthetase inhibitors, such as glufosinate; acetyl-CoA carboxylase inhibitors, such as sethoxydim; protoporphyrinogen oxidase inhibitors, such as flumioxazin; dicamba; auxin herbicides, such as 2,4-D; and herbicides such as bromoxynil.

Examples of a "plant" on which resistance has been conferred by a classical breeding method include oilseed rape, wheat, sunflower and rice resistant to imidazolinone ALS inhibitory herbicides such as imazethapyr, which are already commercially available under a product name of Clearfield (registered trademark). Similarly, there is soybean on which resistance to sulfonylurea ALS inhibitory herbicides such as thifensulfuron-methyl has been conferred by a classical breeding method, which is already commercially available under a product name of STS soybean. Similarly, examples on which resistance to acetyl-CoA carboxylase inhibitors such as trione oxime or aryloxy phenoxypropionic acid herbicides has been conferred by a classical breeding method include SR corn.

The plant on which resistance to acetyl-CoA carboxylase inhibitors has been conferred is described in Proceedings of the National Academy of Sciences of the United States of America (Proc. Natl. Acad. Sci. USA, vol.87, pp.7175-7179 (1990).

Examples of a "plant" on which resistance has been conferred by genetic engineering technique include glyphosate-resistant varieties of corn, soybean, cotton, oilseed rape, sugar beet that have an EPSPS inhibitor resistant EPSPS gene. These varieties are already commercially available under the product names of RoundupReady (registered trademark), Agrisure (registered trademark) GT, Gly-Tol, etc. Similarly, there are corn, soybean, cotton and oilseed rape which are made resistant to glufosinate by genetic engineering technique, which is already commercially available under a product name of LibertyLink (registered trademark). A cotton made resistant to bromoxynil by genetic engineering technique is already commercially available under a product name of BXN likewise. Similarly, there are varieties of corn and soybean that are resistant to both glyphosate and ALS inhibitors, and they have been announced to enter the market under the name of Optimum (registered trademark) GAT (registered trademark). Also, an imazapyr-resistance soybean variety produced by genetic engineering technique has been announced to enter the market under the name of Cultivance (registered trademark).

Mutant acetyl CoA carboxylases that are resistant to acetyl-CoA carboxylase inhibitors are reported, for example, in Weed Science, Vol. 53, pp. 728-746 (2005). A plant with resistance to acetyl-CoA carboxylase inhibitors can be produced by introducing such a mutant acetyl-CoA carboxylase gene into the plant by genetic engineering technique or by introducing a mutation associated with the resistance into a crop acetyl-CoA carboxylase. Furthermore, a plant with resistance to acetyl-CoA carboxylase inhibitors and/or ALS inhibitors can be produced by introducing site-directed mutagenesis for amino acid substitutions into the plant acetyl-CoA carboxylase gene and/or ALS gene, by means of introduction of a mutant nucleic acid having nucleotide substitutions into a plant cell by using a technique represented by chimeraplasty technique (Science vol.285, pp.316-318 (1999)).

A crop plant, such as soybean, with resistance to dicamba can be produced by introducing a gene encoding a dicamba-degrading enzyme, including dicamba monooxygenase isolated from Pseudomonas maltophilia (Science vol.316, pp.1185-1188 (2007)).

A crop plant with resistance to the phenoxy, pyridine oxyacetic acid, and aryloxyphenoxypropionic acid herbicide systems mentioned below can be produced by introducing a gene encoding aryloxyalkanoate dioxygenase: phenoxy herbicides, such as 2,4-D, MCPA, dichlorprop and mecoprop, pyridine oxyacetic acid herbicides, such as fluroxypyr and triclopyr, and aryloxyphenoxypropionic acid herbicides, such as quizalofop-P-ethyl, haloxyfop-P-methyl, fluazifop-P-butyl, diclofop, fenoxaprop-P-ethyl, metamifop, cyhalofop-butyl and clodinafop-propargyl (WO 05/107437, WO 07/053482, WO 08/141154). The resultant crop plant is called a DHT crop plant.

A crop plant with resistance to HPPD inhibitors can be produced by introducing a gene encoding HPPD which shows resistance to HPPD inhibitors (US2004/0058427). By introducing genes that allows for synthesis of homogentisic acid, which is produced from HPPD through another metabolic pathway even when HPPD is inhibited by an HPPD inhibitor, a crop plant resistant to HPPD inhibitors can be produced (WO 02/036787). A plant with resistance to HPPD inhibitors can be produced by introducing a gene for overexpressing HPPD so that HPPD can be produced at a level sufficient for plant growth even in the presence of HPPD inhibitors (WO 96/38567). By introducing a gene encoding prephenate dehydrogenase to increase the production of p-hydoroxyphenylpyruvate, a substrate of HPPD, in addition to the introduction of a gene for overexpressing HPPD, a plant with resistance to HPPD inhibitors can be produced (Plant Physiol., vol.134, pp.92-100 (2004)).

The "plants" described above include plants to which resistance to nematodes and aphids is conferred using a classical breeding method. Examples of such plants includes the soybean plant into which the RAG1 (Resistance Aphid Gene 1) gene, which confers aphid resistance, is introduced.

The aforementioned "plants" include genetically engineered plants produced using such genetic engineering

techniques, which, for example, are able to synthesize selective toxins as known in genus Bacillus.

Examples of toxins expressed in such genetically engineered plants include: insecticidal proteins derived from *Bacillus cereus* or *Bacillus popilliae;* δ-endotoxins such as Cry1Ab, Cry1Ac, Cry1F, Cry1Fa2, Cry2Ab, Cry3A, Cry3Bb1 or Cry9C, derived from *Bacillus thuringiensis;* insecticidal proteins such as VIP1, VIP2, VIP3, or VIP3A; insecticidal proteins derived from nematodes; toxins generated by animals, such as scorpion toxin, spider toxin, bee toxin, or insect-specific neurotoxins; mold fungi toxins; plant lectin; agglutinin; protease inhibitors such as a trypsin inhibitor, a serine protease inhibitor, patatin, cystatin, or a papain inhibitor; ribosome-inactivating proteins (RIP) such as lycine, corn-RIP, abrin, luffin, saporin, or briodin; steroid-metabolizing enzymes such as 3-hydroxysteroid oxidase, ecdysteroid-UDP-glucosyl transferase, or cholesterol oxidase; an ecdysone inhibitor; HMG-COA reductase; ion channel inhibitors such as a sodium channel inhibitor or calcium channel inhibitor; juvenile hormone esterase; a diuretic hormone receptor; stilbene synthase; bibenzyl synthase; chitinase; and glucanase.

Examples of toxins expressed in such genetically engineered plants also include: hybrid toxins of δ-endotoxin proteins such as Cry1Ab, Cry1Ac, Cry1F, Cry1Fa2, Cry2Ab, Cry3A, Cry3Bb1, Cry9C, Cry34Ab or Cry35Ab and insecticidal proteins such as VIP1, VIP2, VIP3 or VIP3A; partially deleted toxins; and modified toxins. Such hybrid toxins are produced from a new combination of the different domains of such proteins, using a genetic engineering technique., As a partially deleted toxin, CrylAb comprising a deletion of a portion of an amino acid sequence has been known. A modified toxin is produced by substitution of one or multiple amino acids of natural toxins.

Examples of such toxins and genetically engineered plants capable of synthesizing such toxins are described in EP-A-0 374 753, WO 93/07278, WO 95/34656, EP-A-0 427 529, EP-A-451 878, WO 03/052073, etc.

Toxins contained in such genetically engineered plants are able to confer resistance particularly to insect pests belonging to Coleoptera, Hemiptera, Diptera, Lepidoptera and Nematodes, to the plants.

Genetically engineered plants, which comprise one or multiple insecticidal pest-resistant genes and which express one or multiple toxins, have already been known, and some of such genetically engineered plants have already been on the market. Examples of such genetically engineered plants include YieldGard (registered trademark) (a corn variety for expressing CrylAb toxin), YieldGard Rootworm (registered trademark) (a corn variety for expressing Cry3Bb1 toxin), YieldGard Plus (registered trademark) (a corn variety for expressing Cry1Ab and Cry3Bb1 toxins), Herculex I (registered trademark) (a corn variety for expressing phosphinotricine N-acetyl transferase (PAT) so as to confer resistance to Cry1Fa2 toxin and glufosinate), NuCOTN33B (registered trademark) (a cotton variety for expressing Cry1Ac toxin), Bollgard I (registered trademark) (a cotton variety for expressing Cry1Ac toxin), Bollgard II (registered trademark) (a cotton variety for expressing Cry1Ac and Cry2Ab toxins), VIPCOT (registered trademark) (a cotton variety for expressing VIP toxin), NewLeaf (registered trademark) (a potato variety for expressing Cry3A toxin), NatureGard (registered trademark) Agrisure (registered trademark) GT Advantage (GA21 glyphosate-resistant trait), Agrisure (registered trademark) CB Advantage (Bt11 corn borer (CB) trait), and Protecta (registered trademark).

The aforementioned "plants" also include plants produced using a genetic engineering technique, which have ability to generate antipathogenic substances having selective action.

A PR protein and the like have been known as such antipathogenic substances (PRPs, EP-A-0 392 225). Such antipathogenic substances and genetically engineered plants that generate them are described in EP-A-0 392 225, WO 95/33818, EP-A-0 353 191, etc.

Examples of such antipathogenic substances expressed in genetically engineered plants include: ion channel inhibitors such as a sodium channel inhibitor or a calcium channel inhibitor (KP1, KP4 and KP6 toxins, etc., which are produced by viruses, have been known); stilbene synthase; bibenzyl synthase; chitinase; glucanase; a PR protein; and antipathogenic substances generated by microorganisms, such as a peptide antibiotic, an antibiotic having a hetero ring, a protein factor associated with resistance to plant diseases (which is called a plant disease-resistant gene and is described in WO 03/000906). These antipathogenic substances and genetically engineered plants producing such substances are described in EP-A-0392225, WO95/33818, EP-A-0353191, etc. A recombinant papaya variety produced by introducing the coat protein gene of papaya ringspot virus (PRSV) is already commercially available under the product name of Rainbow Papaya (registered trademark).

The "plant" mentioned above includes plants on which advantageous characters such as characters improved in oil stuff ingredients or characters having reinforced amino acid content have been conferred by genetically engineering technology. Examples thereof include VISTIVE (registered trademark) (low linolenic soybean having reduced linolenic content) or high-lysine (high-oil) corn (corn with increased lysine or oil content).

Stack varieties are also included in which a plurality of advantageous characters such as the classic herbicide characters mentioned above or herbicide tolerance genes, harmful insect resistance genes, antipathogenic substance producing genes, characters improved in oil stuff ingredients or characters having reinforced amino acid content are combined.

The method of the present invention allows for the improved promotion of the growth of a plant treated with the present compound, even if the plant has been or is to be exposed to an abiotic stress. As used herein, an "abiotic stress" is defined as a stress that leads to growth inhibition of a plant, when the plant is exposed to a stress condition, due to

reduced physiological function of the cells of the plant and deterioration of the physiological state of the plant. Such stress can be quantified as "intensity of stress" according to the equation shown below. The intensity value may be 105 to 200, preferably 110 to 180, and more preferably 120 to 160.

Equation (I): "Intensity of stress" = 100 × "any one of the plant phenotypes in plants not being exposed to an abiotic stress"/"the one of the plant phenotypes in plants being exposed to the abiotic stress"

Abiotic stress may be temperature stress, i.e., high or low-temperature stress, salt stress, water stress, i.e., drought stress or excessive moisture stress. The high-temperature stress refers to a stress that plants experience when they are exposed to a temperature exceeding the suitable temperature for their growth or germination. Specifically, the high-temperature stress may be caused under conditions in which the average growth temperature is 25°C or higher, more harshly 30°C or higher, and even more harshly 35°C or higher in the environment in which the plants are cultivated. The low-temperature stress refers to a stress that plants experience when they are exposed to a temperature lower than the suitable temperature for their growth or germination. Specifically, the low-temperature stress may be caused under conditions in which the average growth temperature is 15°C or lower, more harshly 10°C or lower, and even more harshly 5°C or lower in the environment in which the plants are cultivated. The drought stress refers to a stress that plants experience when they are exposed to a moisture environment that retards their growth by preventing water absorption due to a reduction in the water content of the soil caused by a shortage of rainfall or irrigation. Specifically, the drought stress may be caused under conditions in which the water content in the soil in which the plants are grown is 15% by weight or less, more harshly 10% by weight or less, and even more harshly 7.5% by weight or less, although these values may vary depending on the type of the soil, or in which the pF value of the soil in which the plants are grown is 2.3 or more, more harshly 2.7 or more, and even more harshly 3.0 or more, although these values may vary depending on the type of the soil. The excessive moisture stress refers to a stress that plants experience when they are exposed to a moisture environment in which the water content in the soil is excessively high, so that the growth of the plants is inhibited. Specifically, the excessive moisture stress may be caused under conditions in which the water content in the soil in which the plants are grown is 30% by weight or more, more harshly 40% by weight or more, and even more harshly 50% by weight or more, although these values may vary depending on the type of the soil, or in which the pF value of the soil in which the plants are grown is 1.7 or less, more harshly 1.0 or less, and even more harshly 0.3 or less, although these values may vary depending on the type of the soil. The pF value of soil may be determined according to the "Method for pF Value Measurement" on pages 61 and 62 of "Dojyo, Shokubutsu Eiyo, Kankyo Jiten (Encyclopedia of Soil, Plant Nutrition and Environment)" (TAIYOSHA Co., Ltd., 1994, Matsuzaka et al.). The salt stress refers to a stress that plants experience when they are exposed to an environment that retards their growth by preventing water absorption due to an increase in the osmotic pressure caused by accumulation of salts contained in the soil or hydroponic solution in which the plants are cultivated. Specifically, the salt stress may be caused under conditions in which the osmotic pressure potential due to the salts contained in the soil or hydroponic solution is 0.2 MPa (NaCl concentration of 2,400 ppm) or higher, harshly 0.25 MPa or higher, and more harshly 0.30 MPa or higher. The osmotic pressure in soil can be calculated according to Raoult's equation, shown below, by diluting the soil with water and analyzing the supernatant for salt concentration:

Raoult's Equation: $\pi$ (atm) = cRT
R = 0.082 (L·atm/mol·K)
T = Absolute temperature (K)
c = Ion molar concentration (mol/L)
1 atm = 0.1 MPa

Examples

While the present invention will be more specifically described by way of formulation examples, seed treatment examples, and test examples in the following, the present invention is not limited to the following examples. In the

following examples, the part represents part by weight unless otherwise specified.

Formulation Example 1

Fully mixed are 3.75 parts of compound (1b), 14 parts of polyoxyethylene styrylphenyl ether, 6 parts of calcium dodecyl benzene sulfonate and 76.25 parts of xylene, so as to obtain emulsions.

Formulation Example 2

A wet-pulverized slurry is obtained by mixing 75 parts of compound (1b), 15 parts of propylene glycol (manufactured by Nacalai Tesque), 15 parts of Soprophor FLK (manufactured by Rhodia Nicca), 0.6 parts of Antifoam C Emulsion (manufactured by Dow Corning) and 120 parts of ion exchange water, followed by wet-pulverization of the slurry. A thickener aqueous solution is obtained by mixing 0.3 parts of Kelzan S (manufactured by Kelco), 0.6 parts of Veegum granules (manufactured by R.T. Vanderbilt) and 0.6 parts of Proxel GXL (manufactured by Archchemicals) with 72.9 parts of ion exchange water. A flowable formulation is obtained by mixing 75.2 parts of the wet-pulverized slurry and 24.8 parts of the thickener aqueous solution.

Formulation Example 3

Fifteen (15) parts of compound (1b), 1.5 parts of sorbitan trioleate and 28.5 parts of an aqueous solution containing 2 parts of polyvinyl alcohol are mixed, and the mixture is subjected to fine grinding according to a wet grinding method. Thereafter, 45 parts of an aqueous solution containing 0.05 parts of Xanthan gum and 0.1 parts of aluminum magnesium silicate is added to the resultant mixture, and 10 parts of propylene glycol is further added thereto. The obtained mixture is blended by stirring, so as to obtain flowable formulations.

Formulation Example 4

Forty-five (45) parts of compound (1b), 5 parts of propylene glycol (manufactured by Nacalai Tesque), 5 parts of Soprophor FLK (manufactured by Rhodia Nikka), 0.2 parts of an anti-form C emulsion (manufactured by Dow Corning), 0.3 parts of proxel GXL (manufactured by Arch Chemicals) and 49.5 parts of ion-exchange water are mixed so as to obtain a bulk slurry. One hundred and fifty (150) parts of glass beads (diameter = 1 mm) are put into 100 parts of the slurry, and the slurry is ground for 2 hours while being cooled with cooling water. After ground, the resultant is filtered to remove the glass beads and flowable formulations are obtained.

Formulation Example 5

Mixed to obtain an AI premix are 50.5 parts of compound (1b), 38.5 parts of NN kaolin clay (manufactured by Takehara Chemical Industrial), 10 parts of Morwet D425 and 1.5 parts of Morwer EFW (manufactured by Akzo Nobel Corp.). This premix is ground with a jet mill so as to obtain powder formulations.

Formulation Example 6

Five (5) parts of compound (1b), 1 part of synthetic hydrated silicon oxide, 2 parts of calcium lignin sulfonate, 30 parts of bentonite and 62 parts of kaolin clay are fully ground and mixed, and the resultant mixture is added with water and fully kneaded, and then subjected to granulation and drying so as to obtain granule formulations.

Formulation Example 7

Powder formulations are obtained by mixing 3 parts of compound (1b), 87 parts of kaolin clay and 10 parts of talc.

Formulation Example 8

Twenty-two (22) parts of compound (1b), 3 parts of calcium lignin sulfonate, 2 parts of sodium lauryl sulfate and 73 parts of synthetic hydrated silicon oxide are fully ground and mixed so as to obtain wettable powders.

Seed Treatment Example 1

An emulsion prepared as in Formulation Example 1 is used for smear treatment in an amount of 100 ml per

10 kg of dried sorghum seeds using a rotary seed treatment machine (seed dresser, produced by Hans-Ulrich Hege GmbH) so as to obtain treated seeds.

Seed Treatment Example 2

A flowable formulation prepared as in Formulation Example 2 is used for smear treatment in an amount of 5 ml per 10 kg of dried soybean seeds using a rotary seed treatment machine (seed dresser, produced by Hans-Ulrich Hege GmbH) so as to obtain treated seeds.

Seed Treatment Example 3

A flowable formulation prepared as in Formulation Example 3 is used for smear treatment in an amount of 20 ml per 10 kg of dried corn seeds using a rotary seed treatment machine (seed dresser, produced by Hans-Ulrich Hege GmbH) so as to obtain treated seeds.

Seed Treatment Example 4

Five (5) parts of a flowable formulation prepared as in Formulation Example 4, 5 parts of pigment BPD6135 (manufactured by Sun Chemical) and 35 parts of water are mixed to prepare a mixture. The mixture is used for smear treatment in an amount of 60 ml per 10 kg of dried cotton seeds using a rotary seed treatment machine (seed dresser, produced by Hans-Ulrich Hege GmbH) so as to obtain treated seeds.

Seed Treatment Example 5

A powder formulation prepared as in Formulation Example 5 is used for powder coating treatment in an amount of 5 g per 10 kg of dried corn seeds so as to obtain treated seeds.

Seed Treatment Example 6

A powder formulation prepared as in Formulation Example 7 is used for powder coating treatment in an amount of 400 g per 100 kg of dried rice seeds so as to obtain treated seeds.

Seed Treatment Example 7

A flowable formulation prepared as in Formulation Example 2 is used for smear treatment in an amount of 5 ml per 10 kg of dried soybean seeds using a rotary seed treatment machine (seed dresser, produced by Hans-Ulrich Hege GmbH) so as to obtain treated seeds.

Seed Treatment Example 8

A flowable formulation prepared as in Formulation Example 3 is used for smear treatment in an amount of 20 ml per 10 kg of dried wheat seeds using a rotary seed treatment machine (seed dresser, produced by Hans-Ulrich Hege GmbH) so as to obtain treated seeds.

Seed Treatment Example 9

Five (5) parts of a flowable formulation prepared as in Formulation Example 4, 5 parts of pigment BPD6135 (manufactured by Sun Chemical) and 35 parts of water are mixed and the resultant mixture is used for smear treatment in an amount of 70 ml per 10 kg of potato tuber pieces using a rotary seed treatment machine (seed dresser, produced by Hans-Ulrich Hege GmbH) so as to obtain treated seeds.

Seed Treatment Example 10

Five (5) parts of a flowable formulation prepared as in Formulation Example 4, 5 parts of pigment BPD6135 (manufactured by Sun Chemical) and 35 parts of water are mixed and the resultant mixture is used for smear treatment in an amount of 70 ml per 10 kg of sunflower seeds using a rotary seed treatment machine (seed dresser, produced by Hans-Ulrich Hege GmbH) so as to obtain treated seeds.

Seed Treatment Example 11

A powder formulation prepared as in Formulation Example 5 is used for powder coating treatment in an amount of 4 g per 10 kg of dried sugar beet seeds so as to obtain treated seeds.

Test Example 1

A blank slurry solution containing 5% (V/V) color coat red (Becker Underwood, Inc.), 5% (V/V) CF-Clear (Becker Underwood, Inc.) and 0.4% Maxim XL (Syngenta) was prepared. A slurry solution was prepared by dissolving compound (1b) in the blank slurry solution such that 10 to 50 g of compound 1b is applied to each 100 kg of corn seeds (cultivar: Kuromochi). In a 50-ml centrifuge tube (manufactured by BD Japan), 0.48 ml of the slurry solution was placed for each 20 g of corn seeds (cultivar: Kuromochi) and stirred until the solution was dried, thereby coating the seeds. As a control, seeds were coated with the blank slurry solution and used as seeds for a non-treated group.

Two treated corn seeds were sown in the culture soil (AISAI) in each plastic pot (55 mm in diameter × 58 mm in height) and grown for 18 days under the following conditions: temperature, 27°C; illuminance, about 5,000 lux; day length, 16 hours. The fresh weight of the above-ground part of the plants was measured. The experiment was performed in four replications for each treatment condition and the average weight per individual was calculated.

Table 2

| | Amount of Compound (g/10 kg of seeds) | Average fresh weight of above-ground part (g) | Relative value (%) |
|---|---|---|---|
| Compound (1b) | 0 | 4.2 | 100 |
| | 10 | 4.4 | 105 |
| | 12.5 | 4.4 | 105 |
| | 25 | 5.0 | 119 |
| | 50 | 4.5 | 107 |

As a result, the fresh weight of the above-ground part was increased in the group treated with compound (1b) (within the amount ranging from 10 g to 50 g per 100 kg of seeds), as compared with the control group.

Test Example 2

Corn (cultivar: Hughes 5813) seeds were separately treated with 25 μg or 125 μg of compound (1b) for each seed. The amount of the compound required for the treatment was determined by calculation assuming 4,000 grains per kg of seeds. The seeds were coated using seed treatment machine HEGE11 (produced by Hans-Ulrich Hege). All the seed treatments included Maxim XL (0.167 ounces/100 pounds), Thiram 42S (2.5 ounces/pound), and Cruiser (containing 0.25 mg/seed of thiamethoxam) and CF-Clear polymer at a concentration of 0.5 ounces/pound.

The treated seeds were sown and grown for 226 days, and the corn plants were harvested to obtain grains. The group where the seeds treated in the same way except that the coating solution did not contain compound (1b) were sown was used as the non-treated group. During the testing, no diseases were observed that affected the yield in the present compound-treated group and the non-treated group.

As compared with the non-treated group, the amount of the harvested grains in each treated group was increased by 11% and 9%, respectively, in the groups sown with the seeds treated with 25 μg and 125 μg of compound (1b).

Test Example 3

Each of the 1,000-fold concentrated dimethylsulfoxide (DMSO) solutions of compound (1b) was 1,000-fold diluted with water to prepare a soultion of compound (1b) at the test concentration. The solution was dispensed in 30 ml aliquots into 90 cm diameter Petri dishes, in which seeds of corn plants (cultivar: Koshu) were soaked and incubated for 16 hours at 24°C in the dark. The corn seeds (cultivar: Koshu) were sown in the culture soil (AISAI) in the plastic pots (55 mm in diameter × 58 mm in height), and corn seedlings were grown for 18 days under the following conditions: temperature, 27°C; illuminance, about 5,000 lux; day length, 16 hours. As a control, a 0.1% aqueous DMSO solution was prepared, and seeds were soaked in this solution and then sown and grown into seedlings in the same way as described above. This group was used as the non-treated group.

The fresh weight of the above-ground part of the corn seedlings obtained above was measured. The experiment was performed in four replications for each individual plant at each treatment concentration and the average weight per individual was calculated.

As a result, the fresh weight of the above-ground part was increased in the group treated with compound (1b) at a concentration of 3 ppm, as compared with the non-treated group.

Table 3

| | Concentration | Average fresh weight of above-ground part (g) |
|---|---|---|
| Compound (1b) | 0 ppm (Non-treated group) | 4. 47 |
| | 3 ppm | 6.60 |

Test Example 4

Corn seeds (cultivar: DeKalb 61-69) were sown at 33,684 seeds per acre and grown. Each plot in the field for treatment measured 10 feet in width and 15.5 feet in length. The treatments were arranged using the Randomized Complete Block Design method with eight replications for each treatment. Groups treated with the formulation without compound (1b) were used as the non-treated groups, in which corn was cultivated in the same manner as in the present compound-treated groups. The flowable formulation prepared as described in Formulation Example 2 was applied by foliage spraying 111 days after the sowing, at developmental stage R3 of maize.

The percentage of green leaves among the leaves upper to the lowest ear of corn was determined for each formulation-treated group 143 days after the sowing, at developmental stage R6 of maize. As a result, the percentages were 41.3% and 45.6% on average, respectively, in the groups treated with 100 g and 300 g per hectare of compound (1b), while the percentage was 23.8% on average in the non-treated groups.

Test Example 5

Seeds of oilseed rape (Brasicca napus) were sown and grown. At day 253 after the sowing, at growth stage 65, according to the Biologische Bundesanstalt, Bundessortenamt and CHemical industry (BBCH) scale, the flowable formulation prepared as described in Formulation Example 2 containing compound (1b) was applied in an amount of 250 g per hectare. A plot for the treatment measured 6 m × 10 m. This plot was the present compound-treated group. A plot treated with the formulation without compound (1b) was used as the non-treated group, in which plants were cultivated in the same manner as in the present compound-treated group.

At day 323 after the sowing, when almost all the plants entered growth stage 85, according to the BBCH scale, the percentage of pods remaining green among the pods of the plants was examined and determined in both the present compound-treated and non-treated groups.

As a result, the percentage of green pods in the present compound-treated group was 22.25%, while it was 12.75% in the non-treated group.

Test Example 6

A blank slurry solution containing 5% (V/V) color coat red (Becker Underwood, Inc.), 5% (V/V) CF-Clear (Becker Underwood, Inc.) and 0.4% Maxim XL (Syngenta) was prepared. A slurry solution was prepared by dissolving Compound (1b) in the blank slurry solution such that 10 g to 50 g of compound (1b) is applied to each 100 kg of corn seeds (cultivar: Kuromochi). In a 50-ml centrifuge tube (manufactured by BD Japan), 0.48 ml of the slurry solution was placed for each 20 g of corn seeds (cultivar: Kuromochi) and stirred until the solution was dried, thereby coating the seeds. As a control, seeds were coated with the blank slurry solution and used for a non-treated group.

Two treated corn seeds were sown in the culture soil (AISAI) in each plastic pot (55 mm in diameter × 58 mm in height) and grown for 4 days under the following conditions: temperature, 27°C; illuminance, 5,000 lux; day length, 16 hours. These were subjected to the test.

The pots at day 4 after the sowing were placed in a phytotron under the following conditions in order to expose the plants to low-temperature stress for 7 days.

Conditions: "temperature, 3 ± 2°C; day length, 16 hours; illuminance, about 5,000 lux; humidity, 35 to 80%"

The plants were grown for another 7 days under the following conditions: temperature, 27°C; humidity, 50 to 75%, illuminance, about 5,000 lux; day length, 16 hours. Then the fresh weight of the above-ground part of the plants was measured. The experiment was performed in four replications for each treatment condition and the average weight per individual was calculated.

As a result, an increase in the fresh weight of the above-ground part was also observed in the plants exposed to low-temperature stress in the group treated with compound (1b) (within the amount ranging from 10 g to 50 g per 100 kg of seeds), as compared with the control group.

Table 4

| | Amount of Compound (g/10 kg seeds) | Average fresh weight of above-ground part (g) | Relative value (%) |
|---|---|---|---|
| Compound (1b) | 0 | 1.18 | 100 |
| | 10 | 1.33 | 113 |
| | 12.5 | 1.34 | 114 |
| | 25 | 1.30 | 110 |
| | 50 | 1.29 | 109 |

Test Example 7

In a Petri dish, a hydroponic sponge piece (1 cm × 1 cm × 0.2 cm) was immersed with a half concentration of Murashige- and-Skoog medium (MS culture medium: containing 2.5 mM MES, 1% sucrose and 0.1% Gamborg vitamin solution G1019 (Sigma-Aldrich)). On this sponge piece, 4 to 5 seeds of Arabidopsis thaliana (ecotype Columbia) were aseptically sown. After the low temperature treatment (at 4°C for 2 to 4 days), the plants were grown for 6 days under the following conditions to obtain Arabidopsis seedlings: temperature, 23°C; humidity, 45%; illuminance, 3,500 lux; day length, 16 hours.

Each 0.5 ml of a half concentration of MS medium was dispensed into a 24-well plate (SUMILON MS-80240; manufactured by Sumitomo Bakelite), onto which 5 μl of a 1,000-fold concentrated DMSO solution of compound (1b) was added to prepare medium containing compound (1b) at a concentration of 30 ppm. After thinning the Arabidopsis seedlings to 2 plants per sponge, the seedlings were transplanted in the compound (1b)-containing medium in each well of the 24-well plate, together with the sponge piece and then grown overnight. As a control, a half concentration of MS medium supplemented with 0.1% DMSO was prepared and used as the non-treated group.

Subsequently, the 24-well plate in which Arabidopsis seedlings were placed was sealed with parafilm, placed in water bath at 45°C for 60 minutes to expose the plants to high-temperature stress.

The plants were grown for another 8 days under the following conditions: temperature, 23°C; illuminance, 3,500 lux; day length, 16 hours. Each well was photographed with a digital camera and the green area in the photograph was measured using image analysis software Win ROOF (manufactured by MITANI CORPORATION), thereby quantifying the leaf areas of the plants.

One day after the exposure to the high-temperature stress, the chlorophyll fluorescence (Fv/Fm) in each well was measured using a pulse modulation chlorophyll fluorometer (IMAGING-PAM; manufactured by WALZ).

Table 5

| | Concentration | Mean leaf area of plants |
|---|---|---|
| Compound (1b) | 0 ppm (Non-treated group) | 3.4 $mm^2$ |
| | 30 ppm | 12.6 $mm^2$ |

Test Example 8

Corn seeds (cultivar: PIONEER 31N27) were sown in the culture soil (AISAI) in plastic pots (55 mm in diameter × 58 mm in height) and grown for a week under the following conditions to obtain corn seedlings: temperature, 20 to 25°C; humidity, 50 to 75%; illuminance, about 5,000 lux; day length, 16 hours.

A flowable formulation of the compound (1b) was obtained by adding 120 mg of a mixture of white carbon and a polyoxyethylene alkyl ether sulfate ammonium salt (weight ratio of 1:1) and 300 μl of water to 0.5 mg of compound (1b), followed by fine grinding by a wet grinding method. This flowable formulation was diluted with 50 ml of water, to which RINO (manufactured by NIHON NOHYAKU) was added as a sticker to 5,000-fold dilution, whereby a spray solution was obtained. A sufficient amount of the spray solution was applied to the corn seedlings by using an automatic spraying machine. As a control, a flowable formulation without compound (1b) was prepared and then sprayed to the non-treated group.

Subsequently, the corn seedlings treated with the spray solution were placed in a phytotron under the following conditions in order to expose the plants to low-temperature stress for 5 days.
Conditions: "temperature, 2 ± 2°C; lighting hour, 16 hours; illuminance, about 5,000 lux; humidity, 35 to 80%"
The plants were then grown for another 4 days under the following conditions: temperature, 25 to 28°C; humidity, 50 to 75%, illuminance, about 5,000 lux; day length, 16 hours. Then the fresh weight of the above-ground part of the plants was measured. The experiment was performed in four replications for each treatment condition and the average weight per individual was calculated.
The fresh weight of the above-ground part was increased in the plants exposed to low-temperature stress in the group treated with compound (1b) (within the concentration range of 10 ppm to 100 ppm), as compared with the non-treated group.

Table 6

| | Concentration | Average fresh weight of above-ground part (g) |
|---|---|---|
| Compound (1b) | 0 ppm (Non-treated group) | 0.79 |
| | 10 ppm | 0.89 |
| | 30 ppm | 0.94 |
| | 100 ppm | 0.90 |

Test Example 9

Each of the 1,000-fold concentrated dimethylsulfoxide (DMSO) solutions of compound (1b) was 1,000-fold diluted with water to prepare a soultion of compound (1b) at the test concentration. The solution was dispensed in 30 ml aliquots into 90 cm diameter Petri dishes, in which seeds of corn plants (cultivar: Koshu) were soaked and incubated for 16 hours at 24°C in the dark. The corn seeds were sown in the culture soil (AISAI) in the plastic pots (55 mm in diameter × 58 mm in height), and corn seedlings were grown for 4 days under the following conditions: temperature, 27°C; illuminance, about 5,000 lux; day length, 16 hours. As a control, a 0.1% aqueous DMSO solution was prepared, and seeds were soaked in this solution and then sown and grown into seedlings in the same way as described above. This group was used as the non-treated group.
The corn seedlings were placed in a phytotron under the following conditions in order to expose the plants to low-temperature stress for 7 days.
Conditions: "temperature, 3 ± 2°C; day length, 16 hours; illuminance, about 5,000 lux; humidity, 35 to 80%"
The plants were then grown for another 7 days under the following conditions: temperature, 27°C; humidity, 50 to 75%, illuminance, about 5,000 lux; day length, 16 hours. Then the fresh weight of the above-ground part of the plants was measured. The experiment was performed in four replications for each individual plant for each treatment condition and the average weight per individual was calculated.
As a result, the fresh weight of the above-ground part was increased in the plants exposed to the low-temperature stress in the group treated with compound (1b) within the concentration range of 3 ppm to 30 ppm, as compared with the non-treated group.

Table 7

| | Concentration | Average fresh weight of above-ground part (g) |
|---|---|---|
| Compound (1b) | 0 ppm (Non-treated group) | 1.18 |
| | 3 ppm | 1.49 |
| | 10 ppm | 2.25 |
| | 30 ppm | 1.35 |

Test Example 10

Basil seeds (cultivar: Sweet Basil; Takii) were sown in the culture soil (AISAI) in plastic pots (55 mm in diameter × 58 mm in height) and grown for 24 days under the following conditions to obtain a basil seedling per pot: temperature, 27°C; humidity, 50 to 75%; illuminance, about 6,000 lux; day length, 16 hours.
Compound (1b) was dissolved in dimethylsulfoxide (DMSO) to obtain a DMSO solution of compound (1b) at a

1,000-fold concentration relative to the test concentration. This DMSO solution of compound (1b) was 1,000-fold diluted with water. Then Triton X-100 was added as a surfactant to a final concentration of 0.1%. The spray solution thus prepared was applied in a sufficient amount (15 ml per 3 pots) by means of a handspray.

As a control, a spray solution without compound (1b) was prepared and then sprayed to the non-treated group. The plants were further grown for 1 day under the following conditions: temperature, 27°C; humidity, 50 to 75%; illuminance, about 6,000 lux; day length, 16 hours.

Subsequently, the basil seedlings were placed in a phytotron under the following conditions, to expose the plants to low-temperature stress.

Conditions: "temperature, 3.0°C; illuminance, 800 lux; humidity, 50 to 80%"

The plants were further grown for another 2 days under the following conditions: temperature, 27°C; humidity, 50 to 75%, illuminance, about 6,000 lux; day length, 16 hours.

The percentage of the leaf area of the portions of true leaves of the basil seedlings which survived without being damaged was scored as follows: completely killed with 0% of the survived leaf area to the total leaf area: 0; survived without any damage with 100% of the survived leaf area to the total leaf: 100; and scored from 0 to 100 by increment of 1 by visual observation. The scores of three plants were averaged to determine the damage score. The aerial part of the basil seedlings was removed to measure the fresh weight of the above-ground part. The average weight of three individuals was recorded as the fresh weight of the above-ground part.

Table 8

| | Concentration | Fresh weight of above-ground part (g) | Damage score |
|---|---|---|---|
| Non-treated Group | 0 ppm | 0.34 | 17 |
| Compound (1b) | 10 ppm | 0.62 | 30 |
| | 30 ppm | 0.72 | 38 |
| | 100 ppm | 0.92 | 81 |
| | 250 ppm | 0.94 | 68 |

Test Example 11

Seeds of oilseed rape (Brasicca napus) were sown at 5.5 kg seeds per hectare and grown. At day 240 after the sowing, at growth stage 63, according to the Biologische Bundesanstalt, Bundessortenamt and CHemical industry (BBCH) scale, the flowable formulation prepared as described in Formulation Example 2 containing compound (1b) was applied in an amount of 250 g per hectare. A group for the treatment measured 2 m × 12 m. This group was the present compound-treated group. A group treated with the formulation without compound (1b) was used as the non-treated group, in which plants were cultivated in the same manner as in the treated group.

At day 334 after the sowing, the yield of the seeds was evaluated. As a result, the yield calculated presuming 9% seed water content was 4.55 tons/hectare in the present compound-treated group, while it was 4.25 tons/hectare in the non-treated group. During the testing, no diseases were observed that affected the yield either in the present compound-treated or non-treated group.

Test Example 12

A blank slurry solution containing 5% (V/V) color coat red (Becker Underwood, Inc.), 5% (V/V) CF-Clear (Becker Underwood, Inc.) and 0.4% Maxim XL (Syngenta) is prepared. A slurry solution is prepared by dissolving Compound (1b) in the blank slurry solution such that 0.05 to 0.25 mg of compound (1b) is applied per 1 g of seeds (cultivar: Apogee). Seed treatment machine HEGE11 (produced by Hans-Ulrich Hege) is used to mix 1.3 ml of the slurry solution per 50 g of wheat seeds to coat the seeds. Then the seeds are dried. As a control, seeds are coated with the blank slurry solution and used for a non-treated group. Five coated wheat seeds are sown in the culture soil (AISAI) in each plastic pot (55 mm in diameter × 58 mm in height) and grown for 3 weeks at 18°C. The plants are thinned to select 3 seedlings showing good growth.

At week 3 after the sowing, the seedlings are grown for 7 days under the following conditions to expose the plants to high-temperature stress: temperature, 36°C (day)/32°C (night), humidity, 60 to 70%; illuminance, about 6,000 lux; day length 12 hours. After the exposure to the high-temperature stress, the plants are grown for a week under the conditions of a temperature of 18°C, an illuminance of about 6,000 lux and a day length of 16 days. The fresh weight of the above-ground part of the test plants is examined in 8 replications of 3 seedlings/pot.

Test Example 13

Corn seeds (cultivar: PIONEER 120 31P41) are sown in the culture soil (AISAI) in plastic pots (55 mm in diameter × 58 mm in height) and grown for 7 days under the following conditions: temperature, 20 to 25°C; humidity, 50 to 75%; illuminance, about 5,000 lux; day length, 16 hours.

A DMSO solution of compound (1b) at a 1,000-fold concentration relative to each test concentration is diluted with distilled water to prepare a test soultion. Twenty (20) ml of the test solution obtained is applied around the base of each plant by soil irrigation, and then the plants are grown for two days under the following conditions: temperature, 27°C, humidity, 50 to 75%; illuminance, about 5,000 lux; day length 16 hours. This group is the present compound-treated group. The group to which 20 ml of a 0.1% aqueous DMSO solution is applied by soil irrigation in place of the DMSO solution of compound (1b) is used as the non-treated group.

The plants subjected to the soil irrigation are grown for 5 days under the following conditions, to expose the plants to low-temperature stress: temperature, 2 to 4°C; humidity, 40 to 70%, illuminance, about 5,000 lux; day length, 16 hours in a phytotron. After the exposure to low-temperature stress, the plants are grown for 4 days under the conditions of a temperature of 20 to 25°C, a humidity of 50 to 75%, an illuminance of about 5,000 lux, and a day length of 16 hours. Then the plant weight and the length of true leaves are measured. Also, after the exposure to low-temperature stress, the plants are grown for 1 day under the conditions of a temperature of 20 to 25°C, a humidity of 50 to 75%, an illuminance of about 5,000 lux, and a day length of 16 hours. Then the chlorophyll fluorescence (Fv/Fm) is measured using a pulse modulation chlorophyll fluorometer (MAXI-IMAGING-PAM, WALZ). The chlorophyll content is measured using a chlorophyll gauge (SPAD-502; manufactured by KONICA MINOLTA).

As compared with the non-treated group, the length of true leaves and the plant weight are increased in the present compound-treated groups, and growth promotion in the aerial part of the plants is observed. Also, as compared with the non-treated group, increases in the chlorophyll fluorescence and the chlorophyll content are observed in the present compound-treated groups.

Industrial Applicability

Use of the method of the present invention allows for effective promotion of plant, growth.

## Claims

1. A method for promoting the growth of a plant, comprising treating the plant with an effective amount of a compound represented by the following formula (1):

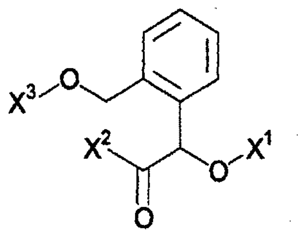

(1)

wherein $X^1$ represents a methyl group, difluoromethyl group or ethyl group; $X^2$ represents a methoxy group or methylamino group; and $X^3$ represents a phenyl group, 2-methylphenyl group or 2,5-dimethylphenyl group.

2. The method according to claim 1, wherein the plant has been or is to be exposed to an abiotic stress.

3. The method according to claim 1 or 2, wherein the compound represented by the formula (1) is a compound selected from the following compound group A:
<Compound group A>

   (1) N-methyl-2-[2-(2,5-dimethylphenoxy)methyl]phenyl-2-methoxyacetamide, and
   (2) N-methyl-2-[2-(2,5-dimethylphenoxy)methyl]phenyl-(2R)-2-methoxyacetamide.

4. The method according to any one of claims 1 to 3, wherein the treatment of the plant is spraying treatment, soil treatment, seed treatment or hydroponic treatment.

5. The method according to any one of claims 1 to 3, wherein the treatment of the plant is seed treatment.

6. The method according to claim 5, wherein the seed treatment is to treat seeds with 10 g or more and 50 g or less, per 100 kg of seeds, of a compound represented by the following formula, (1):

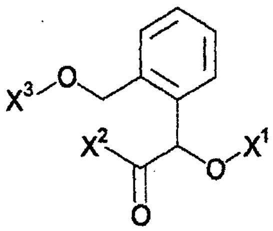

(1)

wherein $X^1$ represents a methyl group, difluoromethyl group or ethyl group; $X^2$ represents a methoxy group or methylamino group; and $X^3$ represents a phenyl group, 2-methylphenyl group or 2,5-dimethylphenyl group.

7. The method according to any one of claims 1 to 6, wherein the plant is rice, corn, oilseed rape, wheat, basil, soybean, sorghum or common bean.

8. The method according to any one of claims 1 to 7, wherein the plant is a transgenic plant.

9. The method according to any one of claims 1 to 8, wherein the abiotic stress is high-temperature stress.

10. The method according to any one of claims 1 to 8, wherein the abiotic stress is low-temperature stress.

11. Use of a compound represented by the following formula (1):

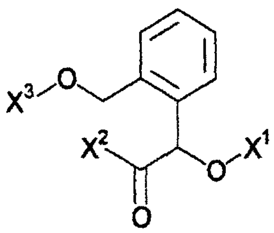

(1)

wherein $X^1$ represents a methyl group, difluoromethyl group or ethyl group; $X^2$ represents a methoxy group or methylamino group; and $X^3$ represents a phenyl group, 2-methylphenyl group or 2,5-dimethylphenyl group;
for promoting the growth of a plant.

**Patentansprüche**

1. Verfahren zum Fördern des Wachstums einer Pflanze, umfassend das Behandeln der Pflanze mit einer wirksamen Menge einer Verbindung, die dargestellt wird durch die folgende Formel (1):

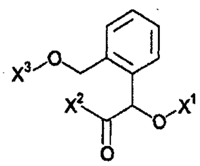

(1)

worin $X^1$ eine Methylgruppe, Difluormethylgruppe oder Ethylgruppe; $X^2$ eine Methoxygruppe oder Methylaminogruppe; und $X^3$ eine Phenylgruppe, 2-Methylphenylgruppe oder 2,5-Dimethylphenylgruppe darstellt.

2. Verfahren nach Anspruch 1, wobei die Pflanze einem abiotischen Stress ausgesetzt war oder werden soll.

3. Verfahren nach Anspruch 1 oder 2, wobei die durch die Formel (1) dargestellte Verbindung eine Verbindung ist, die ausgewählt aus der folgenden Verbindungsgruppe A: <Verbindungsgruppe A>

(1) N-Methyl-2-[2-(2,5-dimethylphenoxy)methyl]phenyl-2-methoxyacetamid und
(2) N-Methyl-2-[2-(2,5-dimethylphenoxy)methyl]phenyl-(2R)-2-methoxyacetamid.

4. Verfahren nach einem der Ansprüche 1 bis 3, wobei die Behandlung der Pflanze eine Sprühbehandlung, eine Bodenbehandlung, eine Saatgutbehandlung oder eine Hydrokulturbehandlung ist.

5. Verfahren nach einem der Ansprüche 1 bis 3, wobei die Behandlung der Pflanze eine Samenbehandlung ist.

6. Verfahren nach Anspruch 5, wobei die Samenbehandlung die Behandlung von Samen mit 10 g oder mehr und 50 g oder weniger pro 100 kg Samen einer Verbindung der folgenden Formel (1) ist:

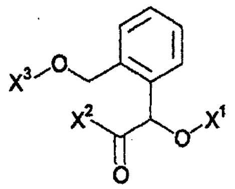

(1)

worin $X^1$ eine Methylgruppe, Difluormethylgruppe oder Ethylgruppe darstellt; $X^2$ eine Methoxygruppe oder Methylaminogruppe darstellt; und $X^3$ eine Phenylgruppe, 2-Methylphenylgruppe oder 2,5-Dimethylphenylgruppe darstellt.

7. Verfahren nach einem der Ansprüche 1 bis 6, wobei die Pflanze Reis, Mais, Raps, Weizen, Basilikum, Sojabohne, Sorghum oder gemeine Bohne ist.

8. Verfahren nach einem der Ansprüche 1 bis 7, wobei die Pflanze eine transgene Pflanze ist.

9. Verfahren nach einem der Ansprüche 1 bis 8, wobei der abiotische Stress ein Hochtemperaturstress ist.

10. Verfahren nach einem der Ansprüche 1 bis 8, wobei die abiotische Belastung Niedertemperaturstress ist.

11. Verwendung einer Verbindung, dargestellt durch die folgende Formel (1)

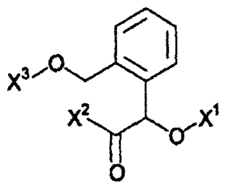

(1)

worin $X^1$ Methylgruppe, Difluormethylgruppe oder Ethylgruppe darstellt; $X^2$ eine Methoxygruppe oder Methylaminogruppe darstellt; und $X^3$ eine Phenylgruppe, 2-Methylphenylgruppe oder 2,5-Dimethylphenylgruppe darstellt; zum Fördern des Wachstums einer Pflanze.

## Revendications

1. Procédé pour favoriser la croissance d'une plante, comprenant le traitement de la plante à l'aide d'une quantité efficace d'un composé qui est représenté par la formule (1) qui suit :

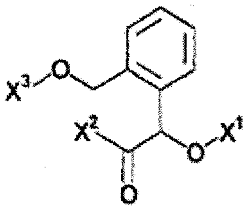

(1)

formule dans laquelle $X^1$ représente un groupe méthyle, un groupe difluorométhyle ou un groupe éthyle ; $X^2$ représente un groupe méthoxy ou un groupe méthylamino ; et $X^3$ représente un groupe phényle, un groupe 2-méthylphényle ou un groupe 2,5-diméthylphényle.

2. Procédé selon la revendication 1, dans lequel la plante a été ou doit être exposée à un stress abiotique.

3. Procédé selon la revendication 1 ou 2, dans lequel le composé qui est représenté par la formule (1) est un composé qui est sélectionné parmi le groupe de composés A qui suit :
<Groupe de composés A>

(1) N-méthyl-2-[2-(2,5-diméthylphénoxy)méthyl]phényl-2-méthoxyacétamide ; et
(2) N-méthyl-2-[2-(2,5-diméthylphénoxy)méthyl]phényl-(2R)-2-méthoxyacétamide.

4. Procédé selon l'une quelconque des revendications 1 à 3, dans lequel le traitement de la plante est un traitement par pulvérisation, un traitement du sol, un traitement des graines ou semences ou un traitement hydroponique.

5. Procédé selon l'une quelconque des revendications 1 à 3, dans lequel le traitement de la plante est un traitement des graines ou semences.

6. Procédé selon la revendication 5, dans lequel le traitement des graines ou semences consiste à traiter des graines ou semences avec 10 g ou plus et 50 g ou moins, pour 100 kg de graines ou semences, d'un composé qui est représenté par la formule (1) qui suit :

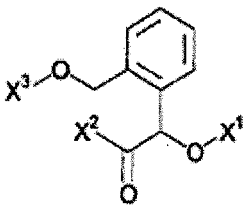

(1)

formule dans laquelle $X^1$ représente un groupe méthyle, un groupe difluorométhyle ou un groupe éthyle ; $X^2$ représente un groupe méthoxy ou un groupe méthylamino ; et $X^3$ représente un groupe phényle, un groupe 2-méthylphényle ou un groupe 2,5-diméthylphényle.

7. Procédé selon l'une quelconque des revendications 1 à 6, dans lequel la plante est le riz, le maïs, le colza, le blé, le basilic, le soja, le sorgho ou le haricot.

8. Procédé selon l'une quelconque des revendications 1 à 7, dans lequel la plante est une plante transgénique.

9. Procédé selon l'une quelconque des revendications 1 à 8, dans lequel le stress abiotique est un stress haute température.

10. Procédé selon l'une quelconque des revendications 1 à 8, dans lequel le stress abiotique est un stress basse température.

11. Utilisation d'un composé qui est représenté par la formule (1) qui suit :

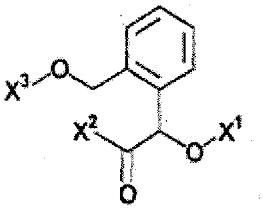

(1)

formule dans laquelle $X^1$ représente un groupe méthyle, un groupe difluorométhyle ou un groupe éthyle ; $X^2$ représente un groupe méthoxy ou un groupe méthylamino ; et $X^3$ représente un groupe phényle, un groupe 2-méthylphényle ou un groupe 2,5-diméthylphényle ; pour favoriser la croissance d'une plante.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2008059053 A1
- WO 2010061940 A
- WO 9527693 A
- WO 05107437 A
- WO 07053482 A
- WO 08141154 A
- US 20040058427 A
- WO 02036787 A
- WO 9638567 A
- EP 0374753 A
- WO 9307278 A
- WO 9534656 A
- EP 0427529 A
- EP 451878 A
- WO 03052073 A
- EP 0392225 A
- WO 9533818 A
- EP 0353191 A
- WO 03000906 A


### Non-patent literature cited in the description


- *Applied Microbial Biotechnology,* 2002, vol. 58, 23-29
- **K. GROSSMANN et al.** *J. Plant Physiol.,* 1999, vol. 154, 805-808
- *CHEMICAL ABSTRACTS,* 394657-24-0
- *CHEMICAL ABSTRACTS,* 173662-97-0
- *Proc. Natl. Acad. Sci. USA,* 1990, vol. 87, 7175-7179
- **WEED.** *Science,* 2005, vol. 53, 728-746
- *Science,* 1999, vol. 285, 316-318
- *Science,* 2007, vol. 316, 1185-1188
- *Plant Physiol.,* 2004, vol. 134, 92-100
- Method for pF Value Measurement. **MATSUZAKA.** Dojyo, Shokubutsu Eiyo, Kankyo Jiten (Encyclopedia of Soil, Plant Nutrition and Environment). TAIYOSHA Co., Ltd, 1994, 61, , 62